# EUROPEAN PATENT APPLICATION

(11) **EP 3 627 269 A1**
(43) Date of publication of application: **25.03.2020**
(21) Application number: 18893998.7
(22) Date of filing: 24.05.2018
(51) Int. Cl.: G05D 1/02

(54) **TARGET TRACKING METHOD AND APPARATUS, MOBILE DEVICE AND STORAGE MEDIUM**

(30) Priority: 27.12.2017 CN 201711443518
(71) Applicant: Ninebot (Beijing) Tech Co., Ltd., Beijing 100192 (CN)
(72) Inventor: TANG, Chu, Beijing 100192 (CN); LIU, Yuejiang, Beijing 100192 (CN)
(74) Representative: Regimbeau
(86) International application number: PCT/CN2018/088243
(87) International publication number: WO 2019/128070

(57) **Abstract**

A target tracking method comprises: using a tracking sensor to detect a position parameter of a target object (S110); according to the position parameter, determining a detection parameter of the tracking sensor, wherein the detection parameter at least includes a detection direction, and the detection direction is used for maintaining the target object in a detection range of the tracking sensor (S120); according to the position parameter and obstacle information, determining a movement path of following the target object (S130); and according to the movement path, adjusting a motion parameter of a mobile device so as to follow the target object, wherein the motion parameter at least includes a motion direction, and the adjustments of the detection direction and the motion direction are mutually independent (S140).

## Description

### CROSS-REFERENCE TO RELATED APPLICATION

This application is based upon and claims priority to Chinese patent application No. 201711443518.2 filed on December 27, 2017, the disclosure of which is hereby incorporated by reference in its entirety.

### TECHNICAL FIELD

The disclosure relates, but is not limited, to the technical field of information, and in particular to a target tracking method and apparatus, a mobile device and a storage medium.

### BACKGROUND

A mobile device (for example, a robot) tracks a target by using a visual system or a wireless communication technology such as an Ultra Wideband (UWB) carrier technology. However, in specific applications, it is found in a related art that when the mobile device tracks the target, the tracking is generally implemented by directly sending a control signal from a tracking system (visual and wireless communication technologies) to the device, and information of an obstacle is not taken into account in the control signal sent by/from the tracking system. Therefore, in an independent tracking process of the mobile device, it is necessary for the tracked target to actively bypass/avoid the obstacle to implement obstacle avoidance tracking, and the mobile device cannot avoid the obstacle independently.

### SUMMARY

In view of this, embodiments of the disclosure are intended to provide a target tracking method and apparatus, a mobile device and a storage medium.

The technical solutions of the disclosure are implemented as follows.

According to a first aspect, an embodiment of the disclosure provides a target tracking method, which is applied to a mobile device and includes:
a position parameter of a target object is detected by using a tracking sensor;
according to the position parameter, a detection parameter of the tracking sensor is determined; the detection parameter at least includes a detection direction, and the detection direction is used for maintaining the target object in a detection range of the tracking sensor;
according to the position parameter and obstacle information, a movement path of following the target object is determined; and
according to the movement path, a motion parameter of the mobile device is adjusted to follow the target object; the motion parameter at least includes: a motion direction, and adjustments of the detection direction and the motion direction are mutually independent.

According to a second aspect, an embodiment of the disclosure provides a target tracking apparatus, which includes:
a tracking detection unit, configured to detect a position parameter of a target object by using a tracking sensor;
a first determination unit, configured to determine a detection parameter of the tracking sensor according to the position parameter;
a second determination unit, configured to determine a movement path of following the target object according to the position parameter and obstacle information; and
a second adjustment unit, configured to adjust a motion parameter of the mobile device according to the movement path to follow the target object; and adjustments of the detection direction and the motion direction are mutually independent.

According to a third aspect, an embodiment of the disclosure provides a mobile device, which includes:
a tracking sensor, configured to detect a position parameter of a target object;
a movable component, configured to adjust a detection direction of the tracking sensor; and
a movement component, configured to move on a movement path of following the target object, the movement path is planned based on the position parameter and acquired obstacle information, and adjustments of a motion direction of the movement component and the detection direction are mutually independent.

According to a fourth aspect, an embodiment of the disclosure provides a computer storage medium; the computer storage medium stores a computer program; and the computer program is executed to perform the target tracking method provided by one or more of the above-mentioned technical solutions.

According to the target tracking method and apparatus, the mobile device and the storage medium provided by the embodiments of the disclosure, adjustments of the detection direction and the motion direction are mutually independent, so that the detection direction and/or a detection range of the tracking sensor does not change along with the motion direction; and therefore, the phenomenon that when a mobile device avoids an obstacle, the change of the motion direction causes the change of the detection direction and thus a target object moves out of the detectable range of the tracking sensor and even lost is prevented, and the success rate for tracking the target object is improved.

### BRIEF DESCRIPTION OF THE DRAWINGS

FIG. 1 is a flow chart of a first target tracking method according to an embodiment of the disclosure.
FIG. 2 is a structural schematic diagram of a target tracking apparatus according to an embodiment of the disclosure.
FIG. 3 is a structural schematic diagram of a mobile device according to an embodiment of the disclosure.
FIG. 4 is a flow chart of a second target tracking method according to an embodiment of the disclosure.

### DETAILED DESCRIPTION

It is found after researching that a mobile device includes a movement component, and a tracking sensor for tracking a target object changes along with the change of a motion direction of the movement component. The movement component needs to avoid an obstacle in/during a motion process. If the direction of the movement component changes too much, it is possible that the tracking sensor is completely deviated from the direction where the target object is located, and thus the target object is lost and the tracking is failed. In view of this, an embodiment provides a mobile device first. An adjustment of/to a detection direction of a tracking sensor and an adjustment of/to a motion direction of a movement component of the mobile device are independent from each other/mutually independent. For example, if the motion direction of the movement component changes, the orientation of the tracking sensor is not adjusted along with the motion direction of the movement component. The movement component can implement the avoidance of an obstacle by means of the adjustment of its own motion direction, and the tracking sensor makes the target object locate in its detection range all the time/throughout by means of the adjustment of its own detection direction. As a result, the phenomenon that the detection direction of the tracking sensor is adjusted due to the adjustment of the motion direction of the movement component and thus the target object is lost is prevented, and the success rate for tracking is improved.

The technical solutions of the disclosure are further elaborated below in detail in combination with the accompanying drawings and specific embodiments of the specification.

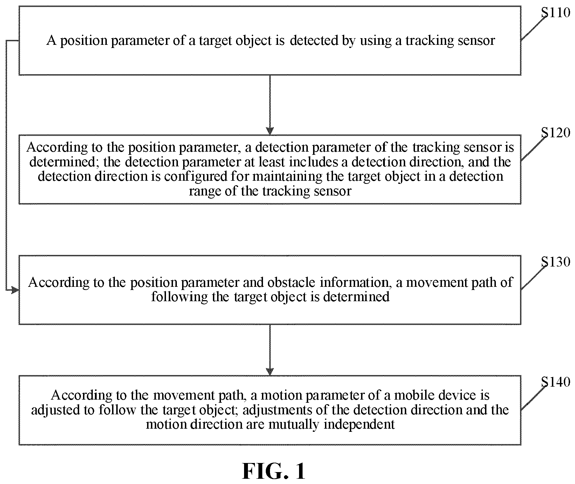

As illustrated in FIG. 1, an embodiment of the disclosure provides a target tracking method, which is applied to a mobile device and includes the following operations.

At S110: a position parameter of a target object is detected by using/by means of a tracking sensor.

At S120: according to the position parameter, a detection parameter of the tracking sensor is determined; the detection parameter at least includes a detection direction, and the detection direction is used for maintaining the target object in a detection range of the tracking sensor.

At S130: according to the position parameter and obstacle information, a movement path of following the target object is determined.

At S140: according to the movement path, a motion parameter of the mobile device is adjusted to follow the target object; and adjustments of the detection direction and the motion direction are mutually independent.

In this embodiment, the tracking sensor can be various sensors capable of detecting a position where the target object is located relative to/with respect to the mobile device, and the position parameter can include: an angle and/or a distance of the target object relative to the mobile device.

The tracking sensor can include: an image collector. An image including the target object is generated by means of the collection of the image collector, content of the image is analyzed to acquire a position of the target object in the image, and the position parameter is obtained by means of the position combined with a depth image.

By virtue of the detection direction of the tracking sensor, the detection range of the tracking sensor can be adjusted to maintain the target object in the detection range all the time. In this way, it is ensured that the target object is tracked.

The detection parameter can include: the detection direction. The detection direction can be a direction in which the tracking sensor transmits a detection signal, and/or, a direction for collecting the detection signal. The detection of the tracking sensor is adjusted based on the detection direction, so that the target object can be maintained in the detection range of the tracking sensor, that is to say, the detection range of the tracking sensor covers the position where the target object is located.

For example, setting the tracking sensor as a vertex of the detection angle, it can be detected in a range of A degrees, and the detection direction can be on a mid-line of the detection angle of A degrees. The mid-line divides the detection angle into two equal angles. The detection direction can be a direction in which the mid-line extends outwards from the vortex.

The detection parameter can further include: other parameters except for the detection direction, for example, a parameter for indicating a transmitted power of the detection signal. Also for example, the tracking sensor can be an image collector, and the detection parameter can further include: a focal distance of a camera, a collection angle of the camera, and other parameters.

The motion parameter can include: a motion direction. In addition to the motion direction, a movement speed, movement acceleration, a movement mode and the like can further be included.

At S130, according to the position parameter and obstacle information, a movement path of the target object is determined. Once the movement path is determined, it is necessary to determine, according to a current movement parameter of the mobile device, an adjustment parameter, such as an adjustment angle of the motion direction, target acceleration, a target speed and the like.

The obstacle information can be from an obstacle map. For example, the mobile device is a mobile device located in a predetermined area. The mobile device stores the obstacle map in advance, and the mobile device can determine the obstacle information by searching the obstacle map according to a current position. The obstacle information can include: obstacle distribution information, information on/about a relative position of the obstacle relative to the mobile device and the like. To sum up, the mobile device needs to adjust its own motion direction according to the obstacle information so as to prevent the collision with the obstacle.

Meanwhile, in this embodiment, the detection direction of the tracking sensor is not adjusted along with the adjustment of the motion direction, so that when the mobile device avoids the obstacle, the detection direction can keep unchanged to prevent the target object from being lost.

In this embodiment of the disclosure, the target object can be a tracked person, a tracked animal, other tracked device and the like.

For example, while the motion direction of the mobile device is adjusted rightwards for 45°, the detection direction is maintained at an original direction.

In short, in this embodiment of the disclosure, since adjustments of the motion direction and the detection direction are mutually independent, the movement of the detection direction does not cause the change in/of the motion direction of the mobile device, and the change in the motion direction also does not cause the change of the detection direction. In this way, the phenomenon that a target is lost is reduced, and the successful avoidance of an obstacle can be implemented by means of the adjustment of the motion direction.

In some embodiments, the mobile device includes: a first portion and a second portion.

The first portion includes a movement component, which is configured to move the mobile device.

The second portion is connected to/with the first portion via a movable component, and includes a tracking sensor; the movable component is at least configured to move the second portion in a first plane relative to the first portion.

The movement component can include: a movement chassis for movement on the ground. The movement chassis can move relative to a support surface such as the ground or a table.

The movement component can further include: a flight component with a capability of flying in the air, which can move relative to the ground.

The second portion is connected via the movable component. With the movable component, the first portion and the second portion can move relative to each other.

For example, if the motion direction needs to be adjusted at present to avoid the obstacle but the detection direction of the tracking sensor does not need to be adjusted, the motion direction of the mobile device is changed by adjusting the movement component, meanwhile the relative movement between the first portion and the second portion is adjusted by adjusting the movable component, so that the angle of the second portion relative to the target object keeps unchanged.

Also for example, if the motion direction needs to be adjusted at present to avoid the obstacle but the detection direction of the tracking sensor does not need to be adjusted, the motion direction of the first portion is changed by adjusting the movement component; furthermore, an original posture is maintained by the movable component, the angular position of the second portion relative to the target object keeps unchanged, and thus it is ensured that the target object is located in the detection range all the time.

Likewise, if the detection direction needs to be adjusted at present but the motion direction needs to maintain unchanged to avoid the obstacle, an orientation of the first portion is adjusted independently, the adjustment of the detection direction is completed independently, and the motion direction is maintained unchanged. For example, the second portion moves relative to the first portion by adjusting the movable component, such that the detection direction is adjusted independently, and the motion direction is maintained unchanged.

Also for example, if the detection direction needs to be adjusted at present but the adjustment of the motion direction is reverse to or partially different from the adjustment of the detection direction to avoid the obstacle, the motion direction of the first portion is adjusted, and the detection direction of the second portion is adjusted independently, so that both the detection direction and the motion direction are adjusted as required.

The step S120 can include: the detection direction of the tracking sensor is adjusted by adjusting the movable component.

The step S130 includes: the motion direction of the mobile device is adjusted by adjusting the motion direction of the movement component.

The movable component includes: a rotating shaft.

The rotating shaft includes: a first rotating shaft structure and a second rotating shaft structure. The first rotating shaft structure can rotate relative to the second rotating shaft structure. If the first rotating shaft structure is fixedly connected to the first portion, the second rotating shaft structure is fixedly connected to the second portion. Or, if the first rotating shaft structure is fixedly connected to the second portion, the second rotating shaft structure is fixedly connected to the first portion. The independent adjustments on the motion direction of the first portion and the detection direction of the second portion are implemented by means of the rotating shaft. For example, when only the motion direction needs to be adjusted, the movable component of the first portion changes its motion direction; and the first portion maintains the orientation of the second portion unchanged by means of relative movement between the two rotating shaft structures of the rotating shaft, such that the detection direction is maintained unchanged. Similarly, when only the detection direction needs to be adjusted, the second portion rotates relative to the first portion by means of the rotating shaft; such that the detection direction is adjusted independently, and the motion direction of the first portion can keep unchanged.

In some embodiments, if the first rotating shaft structure can be an axle center, the second rotating shaft structure is an axle sleeve; and if the first rotating shaft structure is an axle sleeve, the second rotating shaft structure is an axle center. The axle sleeve can rotate relative to the axle center.

For example, the second portion is changed via the movement or shape of the movable component, and the first portion can rotate in a horizontal plane relative to the second portion.

The movable component can further include certain torsional springs and the like. The second portion is twisted under the driving of a rotary motor, so that the second portion rotates relative to the first portion.

In specific implementation, the movable component can be various functional components through which the first portion and the second portion are movably connected, and is not limited to the rotating shaft, the spring and other components,

In some embodiments, the movable component is further configured to move the second portion in a second plane relative to the second portion; and the second plane is perpendicular to the first plane.

The step S120 can include the following operation.

The direction of the tracking sensor is adjusted in the first plane and the second plane by adjusting the movable component.

For example, the first plane is a horizontal plane, and the second plane can be a plane perpendicular to the horizontal plane. Therefore, with the movement of the second portion in the first plane, the detection direction of the tracking sensor in the first plane can be adjusted; and with the movement of the second portion in the second plane, the detection direction of the tracking sensor in the second plane can be adjusted.

In some embodiments, the method further includes the following operations.

Obstacle information of an obstacle is detected.

Based on the obstacle information, an obstacle map for reaching a position where the target object is located is acquired.

According to distribution of the position parameter on the obstacle map, the movement path is planned.

For example, according to the obstacle information and a preset geographical map, the obstacle map is generated.

In this embodiment, the mobile device detects the obstacle information of the obstacle dynamically. The obstacle information can include: obstacle distribution condition information and obstacle attribute information.

The obstacle distribution information includes: information of a relative position of a current detected obstacle relative to the mobile device, such as a relative angle and/or a relative distance.

The obstacle distribution information can further include: information of a relative position between obstacles, which can indicate a distance between two adjacent obstacles. The mobile device can determine whether it can pass through the distance according to its own width.

The obstacle attribute information can include: a length, a width and a height of the obstacle, and whether a sharp projection is present so that the mobile device has a risk of being scratched easily.

In short, the obstacle information can include the above-mentioned one or more types of information, so that the comprehensive evaluation can be made on the mobile device conveniently and the most suitable movement path can be selected out, thus reducing a probability of hindering and damaging the mobile device in a movement process.

Multiple obstacles can be distributed around the mobile device. The mobile device can draw out an obstacle map according to obstacle information of the multiple obstacles, and mark its own position and a target position on the map. Herein, the target position can be determined according to a position where the target object is located. In combination with the obstacle information of the obstacles, the current position and the target position, a movement path is planned on the obstacle map; and with the movement along the movement path, the mobile device can avoid the obstacles and can reach the target position smoothly, etc.

When the movement path is planned, the mobile device can also consider:

its own shape parameter and/or a movement capability parameter and the like of the mobile device, so that the movement path suitable for the mobile device to move to the target position is planned comprehensively.

While the movement path is planned, a tracking parameter is also considered, and a movement parameter is determined. The movement parameter can include: a movement speed, movement acceleration and the like, so that the problem of losing the target object due to too slow movement of the mobile device is prevented. The tracking parameter can include: one or more of constraint parameters such as a maximum distance between the mobile device and the target object, and a maximum speed difference between the mobile device and the target object.

Many manners are provided to detect the position parameter of the target object. For example, the step S110 can include: an image including a pattern of the target object is collected by using an image collector. In this way, a relative position between the target object and the image collector can be calculated by virtue of image identification, in combination with a collection parameter of the image collector such as a focal distance and a collection angle, and in combination with a depth map collected by a depth camera. The position parameter is determined.

The operation that obstacle information of an obstacle is detected includes: the image is identified to determine the obstacle information of the obstacle.

In this embodiment, an image including the pattern of the target object is collected by using an image collector, and the image collector can further collect the pattern of the obstacle, so that the obstacle information of the obstacle can be determined by means of image identification. Therefore, the image collected by the image collector can be used for extracting the position parameter and acquiring the obstacle information, so that multiple purposes of the collected image are implemented, the image does not need to be collected additionally and specifically, thereby simplifying the operation of the mobile device.

In some embodiments, the operation that obstacle information of an obstacle is detected includes: the obstacle information is detected by using an obstacle avoidance sensor.

In this embodiment, the obstacle information is detected by using the obstacle avoidance sensor. Herein, the obstacle avoidance sensor can be disposed on the above-mentioned first portion, so that the detection direction of the obstacle can be changed along with the change in the motion direction of the first portion, and thus the obstacle in the motion direction of the mobile device can be detected all the time.

There are many types of obstacle avoidance sensors. Different types of obstacle avoidance sensors have different manners for detecting the obstacle information. Hereinafter, several optional manners will be provided, and one or more combination therein can be configured to detect the obstacle in specific implementation.

### Optional manner 1:

A distance measurement signal of an ultrasonic wave is transmitted, and a feedback signal returned based on the distance measurement signal is received. Based on a feedback parameter of the feedback signal and a transmission parameter of the distance measurement signal, the obstacle information is determined.

In this manner, the obstacle avoidance sensor can be an ultrasonic sensor, and the ultrasonic sensor can transmit an ultrasonic wave and detect the ultrasonic wave. The transmitted ultrasonic wave is reflected when encountering the obstacle. In this way, the ultrasonic sensor can calculate a distance of the obstacle relative to the mobile device by means of transmission and detection of the ultrasonic wave, in combination with transmission time of the ultrasonic wave, detection time for detecting the reflected wave and a transmission speed of the ultrasonic wave, so as to acquire the above-mentioned position information.

### Optional manner 2:

A first infrared signal transmitted by the obstacle is detected, and the obstacle information is determined based on the first infrared signal.

In this manner, the obstacle avoidance sensor can be an infrared sensor. As the surface of each object is concave or convex and all temperatures in a daily environment cannot reach an absolute zero, a certain infrared ray is radiated. In this embodiment, the infrared sensor is configured to detect the first infrared signal transmitted by the obstacle to acquire the obstacle information.

### Optional manner 3:

An infrared distance meter is configured to transmit a second infrared signal, detect a third infrared signal returned based on the second infrared signal, and determine the obstacle information based on the second infrared signal and the third infrared signal.

This manner is similar to the ultrasonic distance measurement manner, and the only difference lies in that the signal for measuring a distance in this embodiment is an infrared signal. With the infrared distance measurement, the distance between the obstacle and the mobile device can be known; and then in combination with an angle of the detected third infrared signal, a relative angle between the obstacle and the mobile device can be predicted.

### Optional manner 4:

An image is collected by using an image sensor, and the obstacle information is determined based on the collected image.

For example, one or more cameras specifically configured to collect obstacle information via a visual system can be disposed on the first portion to collect an image in an advancement direction around the mobile device, thus obtaining the obstacle information and constructing an obstacle map.

In some embodiments, the step S110 can include the following operation.

In combination with the position parameter and a tracking algorithm, a detection parameter of the tracking sensor is determined.

The step S130 can include the following operation.

In combination with the position parameter, the obstacle information and an obstacle avoidance algorithm, the movement path of the target object is determined.

The tracking algorithm can include: a tracking function for tracking the target object. The position parameter serves as one of dependent variables of the tracking function. During specific implementation, the dependent variables can further include: a current detection parameter of the mobile device. A target detection parameter can be calculated by inputting the dependent variables to the tracking function. Herein, the target detection parameter can be an adjustment target of the detection parameter, and can also be an adjustment amount for calculating the detection parameter. In some embodiments, the tracking algorithm can calculate the target detection parameter and/or adjustment amount and the like according to the dependent variables and an adjusted target effect parameter.

In this embodiment, the calculation of the movement path is determined in combination with the position parameter, the obstacle information and an obstacle avoidance algorithm. Both the position parameter and the obstacle information can serve as one of dependent variables of the obstacle avoidance algorithm to plan the movement path. In some embodiments, the operation can further include: a tracking effect parameter, which serves as a known quantity of the avoidance algorithm to calculate the movement path.

In some embodiments, the tracking algorithm and the obstacle avoidance algorithm are independent from each other to act on the adjustments of the detection direction of the tracking sensor and the motion direction of the movement component.

In some embodiments, the method further includes the following operation.

After the mobile device avoids the obstacle, the motion direction of the mobile device is adjusted according to the detection direction.

In this embodiment, in order to prevent a phenomenon that the motion direction of the mobile device is deviated from the target object too much to result in that the target object cannot be located in the detection range no matter how the detection direction of the tracking sensor is adjusted, it is preferable that after the mobile device avoids the obstacle, the motion direction is adjusted to be consistent with the detection direction as much as possible. Therefore, the occurrence of the above-mentioned phenomenon is lowered and thus the phenomenon that the target object is lost is reduced once again.

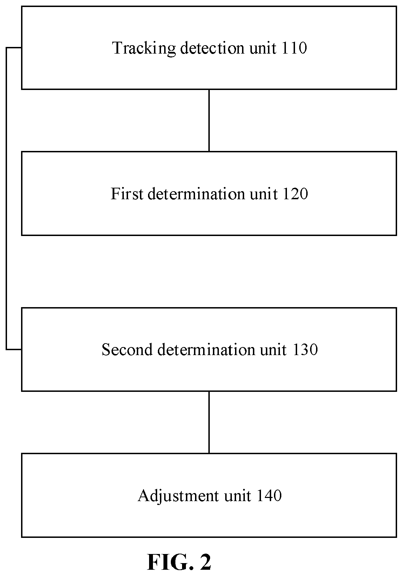

As illustrated in FIG. 2, in an embodiment a target tracking apparatus is provided, and the device includes: a tracking detection unit 110, a first determination unit 120, a second determination unit 130 and an adjustment unit 140.

The tracking detection unit 110 is configured to detect a position parameter of a target object by using a tracking sensor.

The first determination unit 120 is configured to determine, according to the position parameter, a detection parameter of the tracking sensor; and the detection parameter at least includes a detection direction, and the detection direction is used for maintaining the target object in a detection range of the tracking sensor.

The second determination unit 130 is configured to determine, according to the position parameter and obstacle information, a movement path of following the target object.

The adjustment unit 140 is configured to adjust, according to the movement path, a motion parameter of the mobile device to follow the target object; and the motion parameter at least includes: a motion direction. Adjustments of the detection direction and the motion direction are mutually independent.

In this embodiment, the tracking detection unit 110 can correspond to the tracking sensor, and can acquire the position parameter by collecting the target object.

Both the first determination unit 120 and the second determination unit 130 can correspond to a processor in the mobile device. The processor can be: a central processor, a microprocessor, a digital signal processor, an application processor, a programmable array or an application-specific integrated circuit.

In this embodiment, the detection direction and the motion direction are independent from each other, or adjustments of the detection parameter and the motion parameter are independent from each other and are not interfered with each other. In this way, the phenomenon that the detection parameter changes along with the change of the motion parameter to lost the target object is reduced, and the success rate for tracking the target is improved.

In some embodiments, the mobile device includes: a first portion and a second portion.

The first portion includes a movement component, configured to move the mobile device.

The second portion is connected to the first portion via a movable component, and includes: a tracking sensor. The movable component is at least configured to move the second portion in a first plane relative to the first portion.

The first determination unit 120 is configured to adjust the detection direction of the tracking sensor by adjusting the movable component.

The adjustment unit 140 is configured to adjust the motion direction of the mobile device by adjusting the motion direction of the movable component.

In some embodiments, the movable component is further configured to move the second portion in a second plane relative to the second portion; and the second plane is perpendicular to the first plane.

The first determination unit 120 is configured to adjust the direction of the tracking sensor in the first plane and the second plane by adjusting the movable component.

In some embodiments, the apparatus further includes: an obstacle detection unit, a map drawing unit and a planning unit.

The obstacle detection unit can be configured to detect obstacle information of an obstacle, and includes various sensors for detecting the obstacle information to detect the obstacle information.

The map drawing unit can correspond to a processor, and can be configured to acquire an obstacle map for reaching a position where the target object is located based on the obstacle information.

The planning unit can correspond to the processor, and can be configured to plan the movement path according to distribution of the position parameter on the obstacle map.

In some embodiments, the tracking detection unit 110 can be configured to collect an image including a pattern of the target object by using an image collector; and the obstacle detection unit can be configured to identify the image to determine the obstacle information of the obstacle.

The obstacle detection unit is further configured to detect the obstacle information by using an obstacle avoidance sensor.

For example, the obstacle detection unit can be configured to execute at least one of the followings:
transmit a distance measurement signal of an ultrasonic wave; receive a feedback signal returned based on the distance measurement signal; and determine, based on a feedback parameter of the feedback signal and a transmission parameter of the distance measurement signal, the obstacle information;
detect a first infrared signal transmitted by the obstacle, and determine the obstacle information based on the first infrared signal;
transmit a second infrared signal by using an infrared distance meter, detect a third infrared signal returned based on the second infrared signal, and determine the obstacle information based on the second infrared signal and the third infrared signal; and
collect an image by using an image sensor, and determine the obstacle information based on the collected image.

The first determination unit 120 is configured to determine, in combination with the position parameter and a tracking algorithm, a detection parameter of the tracking sensor.

The second determination unit 130 is configured to determine, in combination with the position parameter, obstacle information and an obstacle avoidance algorithm, a movement path of the target object.

In some embodiments, the adjustment unit 140 is further configured to adjust, after the mobile device avoids the obstacle, the motion direction of the mobile device according to the detection direction.

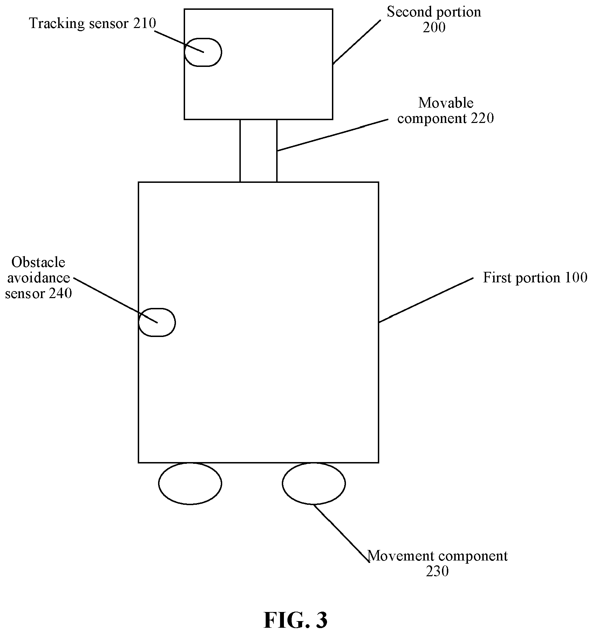

As illustrated in FIG. 3, in an embodiment a mobile device is provided, and the device includes: a tracking sensor 210, a movable component 220 and a movement component 230.

The tracking sensor 210 is configured to detect a position parameter of a target object.

The movable component 220 is configured to adjust a detection direction of the tracking sensor 210.

The movement component 230 is configured to move on a movement path of following the target object; the movement path is planned based on the position parameter and acquired obstacle information. Adjustments of a motion direction of the movement component 230 and the detection direction are mutually independent.

In this embodiment, the tracking sensor 210 can be various devices for detecting the position parameter of the target object, for example, an ultrasonic sensor, an infrared sensor and a UWB receiver. If the tracking sensor 210 is the UWB receiver, the target object includes a UWB beacon, and the beacon can be used for transmitting a UWB signal.

The movable component 220 can be configured to adjust the detection direction of the tracking sensor 210 via adjustment of its own position parameter and/or change of a shape.

The movement component 230 can be various devices for moving the mobile device, for example, a chassis including a roller, a flight component and the like that makes the mobile device avoid the obstacle by using its own motion direction. In short, by means of the movable component 220, the detection direction and the motion direction can be adjusted independently, so that the phenomenon that the detection direction relies on the motion direction to lose the target object is reduced, and the success rate for tracking the target is improved.

In some embodiments, the mobile device includes: a first portion 100 and a second portion 200.

The first portion 100 includes the movement component 230.

The second portion 200 includes the tracking sensor 210, and is connected to the first portion 100 via the movable component 220. The movable component 220 is at least configured to move the second portion 200 in a first plane relative to the first portion 100.

In this embodiment, the second portion 200 can be installed above the first portion 100, and connected via the movable component 220. The movable component 220 can be a rotating shaft or a rotating device capable of rotating in one direction or multiple directions. For example, the movable component 220 can be a rotating shaft rotating perpendicular to the first plane.

In some embodiments, the movable component 220 is further configured to move the second portion 200 in a second plane relative to the second portion 200; and the second plane is perpendicular to the first plane.

For example, the movable component 220 can be: a spherical rotating structure; an outer shell of the spherical rotating structure is disposed on the first portion 100; and an inner shell of the spherical rotating structure is fixedly connected to the second portion 200. The inner shell can rotate in the outer shell. When rotating in the first plane, the orientation of the first portion 100 relative to the second portion 200 in the first plane can be adjusted. When rotating in the second plane, the height of the second portion 200 relative to the first portion 100 can be adjusted.

In some embodiments, the mobile device further includes: an obstacle avoidance sensor 240, configured to detect the obstacle information.

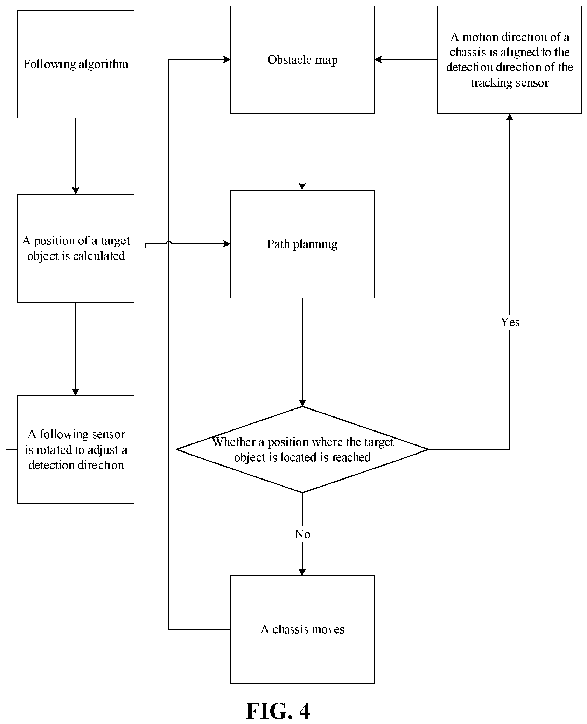

In an embodiment a computer storage medium is provided; the computer storage medium stores a computer program; and the computer program can implement, after being executed, the target tracking method provided by one or more of the above-mentioned technical solutions, for example, the method illustrated in FIG. 1 and/or FIG. 4.

The computer storage medium in this embodiment can be various types of storage media, such as a random storage medium, a read-only storage medium, a flash memory, a mobile hard disk, a flash disc or an optical disc, and can be a non-instantaneous storage medium optionally.

An embodiment of the disclosure provides a specific example based on the above-mentioned solutions.

### Example 1:

During a process of a ground robot following a target object to advance, an obstacle map is established.

In the following process, the robot avoids the obstacle actively and keeps following the target object without interruption. For example, the target object is located in a visual field of a visual system, or in a detection range of other tracking sensors all the time by adjusting or maintaining a detection direction.

Control signals for advancement of the robot, including a control signal generated by a following module of the target object and a control signal generated by an obstacle avoidance module, is switched automatically and dynamically. The two control signals are independent from each other. The control signal generated by the following module can be at least used for adjusting the detection direction. The control signal generated by the obstacle avoidance module can be used for controlling a motion direction of the robot, etc.

Hereinafter, an obstacle avoidance method for a self-acting robot is provided. With reliance on an online updated obstacle map, an optimal movement path is calculated in a solution optimization method according to a position of the robot on the map and a position of a set target object, thus following the target object. For example, the robot follows as follows.

A mobile robot device follows a set target object to advance. Generally, the following system can be implemented via a visual method or a radio signal.

The following system based on the visual method is often implemented by means of target object detection based on a Red Green Blue-Depth (RGB-D) image and the tracking system. A followed target object is selected, a distance and a relative angle between the followed target object and the robot device are calculated continuously, and the relative distance and angle are converted into a control signal for the mobile robot, thus implementing the following of the robot to the target object.

The following system based on the radio/wireless signal is implemented by carrying a special radio system on the mobile robot and a followed target object, such as a UWB signal based following system. The followed target object is carried with a beacon and the robot is carried with a transmitting-receiving system. In a following process, the robot calculates a distance and an angle of the followed target object relative to the robot according to a received signal transmitted by the beacon, and converts the distance and the angle into a control signal for the mobile robot, thus implementing the following of the robot to the target object.

### Obstacle avoidance of robot:

The obstacle avoidance refers to that when perceiving a static and dynamic object via a sensor to hinder the passage in a traveling process according to collected state information of an obstacle, the mobile robot avoids the obstacle effectively according to a certain method, and reaches a position point where a target object is located at last. The obstacle avoidance is a basic requirement to implement independent navigation of the robot. The common obstacle avoidance sensor mainly includes an ultrasonic sensor, a visual sensor, an infrared sensor, a laser sensor and the like. The obstacle avoidance method can rely on a real-time updated obstacle map. However, no matter what method is, the obstacle avoidance system of the robot is to use an obstacle avoidance algorithm to generate an advancement manner (a path, a speed and the like) through which the robot reaches a place where the set target object is located, convert the advancement manner into a control signal for the robot, and control the robot to avoid the obstacle independently for advancement.

Both the following system and the obstacle avoidance system of the robot have a specific following algorithm or obstacle avoidance algorithm to generate the control signal to implement the following or obstacle avoidance of the robot, and the two control signals are independent from each other. Therefore, in the following process when the robot avoids the obstacle or in the process of avoiding the obstacle, the tracking for the target object is not lost.

The sensor used by/in the robot for following has an independent degree of freedom relative to a chassis of the robot. In this example, the chassis having an action capability and the sensor relied by a following function need to be separately provided for the robot in design in this example.

The robot follows the set target object for advancement. Herein, a situation where a computer visual technology is configured to follow a pedestrian serves as an example for illustration. Generally, a following system of one pedestrian includes a body detecting and tracking technology based on an RGB image. For a continuous video sequence, a followed target object is selected at the beginning and a rectangular frame is often configured to represent its position in an image. In each subsequent frame, a position of the tracked target object in a current frame is given by detecting and tracking systems. A distance and an angle between the target object and the robot are calculated by means of a corresponding depth image output by a depth camera and the position of the target object in the image, and are converted into a control signal to drive the robot to follow the followed target object for advancement. In this disclosure, a following method is to first calculate a distance and an angle of a target object relative to a robot, converts the distance and the angle into a position of the followed target object in an obstacle map by using milemeter information of the robot, and transmits the position information to a local path planner. The path planner gives an advancement control signal for a chassis of the robot; and a following sensor direction of the robot is controlled by using the angular information obtained by following.

The position of the target object in the visual following is converted into a coordinate point on the obstacle map to serve as a position point where the robot advances to the target object. The planner searches for, by using the obstacle map, an optimal movement path reaching the position point of the target object from the position of the robot, and converts the optimal movement path into a speed control signal for the chassis of the robot; and thus, the robot is driven to avoid the obstacle and reach the position point of the set target object.

The obstacle avoidance algorithm or obstacle avoidance system can rely on an obstacle map. The map is a map established by using a sensor with depth information, in which the robot is as a center and a position of an obstacle in a surrounding environment is marked. The obstacle map needs to be updated in real time to reflect an obstacle condition around the robot. In this method, the establishment and update of the map are carried out synchronously along with the following, that is, the following algorithm and the map establishment algorithm are operated independently.

The robot control signal generated by the following and the control signal generated by the obstacle avoidance are combined and automatically switched to implement the effect of actively avoiding the obstacle under a condition where the tracked target object is not lost.

In the design of the robot, the sensor relied by the following has an independent degree of freedom relative to the chassis, so as to ensure that the following sensor is aligned to the target object all the time to obtain a continuous stable signal (regardless of visual or UWB). The following algorithm calculates an angle of the followed target object relative to the robot, and converts the angle into a control signal for a motor providing the degree of freedom of the sensor, so that the direction of the following sensor is always aligned to the followed target object. For the visual following, it can be ensured that the followed target object is in a center of the image. For the UWB, it can be ensured that the followed target object (the carried beacon) is in a maximum gain direction of a directional diagram of a UWB antenna. Therefore, an optimal visual/radio signal is obtained.

The chassis for providing the action capability of the robot is controlled by a control signal output by an obstacle avoidance module (based on the local path planner).

The following sensor and the chassis relied by the following implement separate control, so that it is ensured that the robot avoids the obstacle in the process of following the target object, without interruption of the following.

When it is determined that the robot reaches the position of the target object, a follow-up mode is provided. The chassis steers along with the sensor to adjust the posture, so that the chassis is aligned to the followed target object.

### Example 2:

A robot control platform (for example, Loomo) is adopted. A sensor for visual following is carried on a head of a robot, and has a degree of freedom in a Yaw direction and a Pitch direction.

If a person stands at an original point having a coordinate of (0, 0, 0), faces to a front direction of an X axis, and has an upward direction of a head being a front direction of a Y axis and a direction of a right hand being a front direction of a Z axis, the method for calculating rotation angle and direction is as follows.

The Yaw rotates around the Y axis, and the plane under a foot of the person standing at the (0, 0, 0) point is an XOZ plane.

The Pitch rotates around the X axis, and the plane under the foot of the person standing at the (0, 0, 0) point is an XOY plane.

The Roll rotates around the Z axis, and the plane under the foot of the person standing at the (0, 0, 0) point is a YOZ plane.

For visual following, a following method based on a vision is to calculate a position of a target object in an image, and calculate a distance and an angle of the target object relative to the robot by using a depth image. The angle is configured to control the head of the robot, so that the head of the robot is aligned to the followed target object.

Milemeter information of the robot is configured to convert a relative position of the followed target object into an absolute coordinate of the target object, and the coordinate position is set as a position of a target object of a current path planner.

Fisheye and depth sensors on the head of the robot are configured to establish an obstacle map. The fisheye and depth sensors each are one type of the above-mentioned tracking sensor.

For local path planning obstacle avoidance, a path planning module calculates an optimal advancement path of a robot under a current state by using a current obstacle map and a set position of a target object, and converts the optimal advancement path into a control signal for a chassis of the robot, thus controlling the chassis for advancement. Herein, the chassis is one type of the above-mentioned movement component.

### Example 3:

The following uses UWB following, and a UWB antenna is carried on a body of a robot. However, the degree of freedom in a yaw direction is provided by one motor, and the rest are similar to that in the example 2. The robot avoids an obstacle automatically on the premise of not affecting normal following in a following process. A following sensor, and a chassis for supporting advancement of the robot are separately controlled, and the control can be freely switched. An obstacle map is established simultaneously in the following process.

### Example 4:

As illustrated in FIG. 4, in an embodiment a target tracking method is provided, and the method includes the following operations.

A following algorithm is acquired.

A position of a target object is calculated by using the acquired following algorithm.

A following sensor is rotated to adjust a detection direction.

The calculated position of the target object is transmitted to a path planning module.

The path planning module acquires an obstacle map, and plans a path in combination with the obstacle map and the received position of the target object; and the planned path is the above-mentioned movement path.

It is determined whether the position where the target object is located is reached.

If yes, a motion direction of a chassis is aligned to a detection direction of the tracking sensor.

If no, the chassis continues to move. Herein, the chassis moves according to the planned path.

In some embodiments provided by the disclosure, it should be understood that the disclosed equipment and method can be implemented in another manner. The equipment embodiment described above is only schematic, and for example, division of the units is only logic function division, and other division manners can be adopted during practical implementation. For example, multiple units or components can be combined or integrated into another system, or some characteristics can be neglected or not executed. In addition, coupling, or direct coupling or communication connection between each displayed or discussed component can be indirect coupling or communication connection, implemented through some interfaces, of the equipment or the units, and can be electrical and mechanical or adopt other forms.

The units described as separate parts can or cannot be physically separated, and parts displayed as units can or cannot be physical units, and namely can be located in the same place, or can also be distributed to multiple network units. Part or all of the units can be selected to achieve the purpose of the solutions of the embodiments according to a practical requirement.

In addition, each function unit in each embodiment of the disclosure can be integrated into a processing unit, each unit can also exist independently, and two or more than two unit can also be integrated into a unit. The integrated unit can be implemented in a hardware form, and can also be implemented in form of hardware and software function unit.

Those of ordinary skill in the art should know that: all or part of the steps of the above-mentioned method embodiment can be implemented by instructing related hardware through a program, the above-mentioned program can be stored in a computer-readable storage medium, and the program is executed to execute the steps of the above-mentioned method embodiment; and the storage medium includes: various media capable of storing program codes such as mobile storage equipment, a Read-Only Memory (ROM), a Random Access Memory (RAM), a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

### INDUSTRIAL APPLICABILITY

In the technical solutions provided by embodiments of the disclosure, adjustments of a detection direction and a motion direction of a mobile device implements decoupling, so that adjustments of the detection direction and the motion direction can be mutually independent. In this way, when an obstacle needs to be avoided by means of the adjustment of the motion direction, the detection direction is not adjusted synchronously, such that the detection direction can be maintained to track a target object continuously. Therefore, the phenomenon that the target object is lost due to obstacle avoidance is reduced, the success rate for tracking is improved, and the positive industrial effect is achieved; the implementation is simple; and the disclosure can be widely applied in industry.

## Claims

1. A target tracking method, applied to a mobile device, comprising:
detecting a position parameter of a target object by using a tracking sensor;
according to the position parameter, determining a detection parameter of the tracking sensor, wherein the detection parameter at least comprises a detection direction, and the detection direction is used for maintaining the target object in a detection range of the tracking sensor;
according to the position parameter and obstacle information, determining a movement path of following the target object; and
according to the movement path, adjusting a motion parameter of the mobile device to follow the target object, wherein the motion parameter at least comprises a motion direction, and adjustments of the detection direction and the motion direction are mutually independent.

2. The method of claim 1, wherein
the mobile device comprises:
a first portion, comprising: a movement component, configured to move the mobile device;
a second portion, connected to the first portion via a movable component, comprising: a tracking sensor, wherein the movable component is at least configured to move the second portion in a first plane relative to the first portion;
the determining a detection parameter of the tracking sensor according to the position parameter to maintain the target object in a detection range of the tracking sensor comprises:
adjusting the detection direction of the tracking sensor by adjusting the movable component; and
the adjusting a motion parameter of the mobile device to follow the target object according to the movement path comprises:
adjusting the motion direction of the mobile device by adjusting a motion direction of the movement component.

3. The method of claim 2, wherein
the movable component is further configured to move the second portion in a second plane relative to the second portion; wherein the second plane is perpendicular to the first plane; and
the adjusting the detection direction of the tracking sensor by adjusting the movable component comprises:
adjusting the direction of the tracking sensor in the first plane and the second plane by adjusting the movable component.

4. The method of any one of claims 1 to 3, further comprising:
detecting obstacle information of an obstacle;
based on the obstacle information, acquiring an obstacle map for reaching a position where the target object is located; and
according to distribution of the position parameter on the obstacle map, planning the movement path.

5. The method of claim 4, wherein
the detecting a position parameter of a target object comprises:
collecting an image including a pattern of the target object by using an image collector; and
the detecting obstacle information of an obstacle comprises:
identifying the image to determine the obstacle information of the obstacle.

6. The method of claim 4, wherein
the detecting obstacle information of an obstacle comprises:
detecting the obstacle information by using an obstacle avoidance sensor.

7. The method of claim 6, wherein
the detecting the obstacle information by using an obstacle avoidance sensor comprises at least one of the followings:
transmitting a distance measurement signal of an ultrasonic wave; receiving a feedback signal returned based on the distance measurement signal; and based on a feedback parameter of the feedback signal and a transmission parameter of the distance measurement signal, determining the obstacle information;
detecting a first infrared signal transmitted by the obstacle, and determining the obstacle information based on the first infrared signal;
transmitting a second infrared signal by using an infrared distance meter, detecting a third infrared signal returned based on the second infrared signal, and determining the obstacle information based on the second infrared signal and the third infrared signal; and
collecting an image by using an image sensor, and determining the obstacle information based on the collected image.

8. The method of any one of claims 1 to 3, wherein
the determining a detection parameter of the tracking sensor according to the position parameter comprises:
in combination with the position parameter and a tracking algorithm, determining the detection parameter of the tracking sensor; and
the determining a movement path of following the target object according to the position parameter and obstacle information comprises:
in combination with the position parameter, the obstacle information and an obstacle avoidance algorithm, determining the movement path for the target object.

9. The method of any one of claims 1 to 3, further comprising:
after the mobile device avoids an obstacle, adjusting the motion direction of the mobile device according to the detection direction.

10. A target tracking apparatus, comprising:
a tracking detection unit, configured to detect a position parameter of a target object by using a tracking sensor;
a first determination unit, configured to determine a detection parameter of the tracking sensor according to the position parameter;
a second determination unit, configured to determine a movement path of following the target object according to the position parameter and obstacle information; and
a second adjustment unit, configured to adjust a motion parameter of the mobile device according to the movement path to follow the target object, wherein adjustments of the detection direction and the motion direction are mutually independent.

11. A mobile device, comprising:
a tracking sensor, configured to detect a position parameter of a target object;
a movable component, configured to adjust a detection direction of the tracking sensor; and
a movement component, configured to move on a movement path of following the target object, wherein the movement path is planned based on the position parameter and acquired obstacle information, and adjustments of a motion direction of the movement component and the detection direction are mutually independent.

12. The mobile device of claim 11, comprising:
a first portion, comprising the movement component; and
a second portion, comprising the tracking sensor, and connected to the first portion via the movable component, wherein the movable component is at least configured to move the second portion in a first plane relative to the first portion.

13. The mobile device of claim 12, wherein
the movable component is further configured to move the second portion in a second plane relative to the second portion; wherein the second plane is perpendicular to the first plane.

14. The mobile device of claim 11, further comprising:
an obstacle avoidance sensor, configured to detect the obstacle information.

15. A computer storage medium, storing a computer program, and the computer program being executed to perform the target tracking method of any one of claims 1 to 9.
